# EUROPEAN PATENT APPLICATION

(11) **EP 1 653 546 A1**
(43) Date of publication of application: **03.05.2006**
(21) Application number: 04746002.7
(22) Date of filing: 16.06.2004
(51) Int. Cl.: H01M 8/04, H01M 8/00, H01M 8/10

(54) **FUEL CELL COGENERATION SYSTEM**

(30) Priority: 17.06.2003 JP 2003171942
(71) Applicant: EBARA BALLARD CORPORATION, Tokyo 144-0042 (JP)
(72) Inventor: SU, Qingquan, Ohta-ku, Tokyo 1440042 (JP)
(74) Representative: HOFFMANN EITLE
(86) International application number: PCT/JP2004/008461
(87) International publication number: WO 2004/112180

(57) **Abstract**

To provide a fuel cell cogeneration system which can achieve high electricity generation efficiency, high waste heat recovery efficiency and a high system operation rate. A fuel cell cogeneration system comprises: a reforming device 7 for reforming raw material fuel 2 to generate reformate 3; a humidifying device 70 for humidifying oxidant gas 61 with recovered water 42 recovered from the reformate; a fuel cell 20 for generating electricity through an electrochemical reaction between the reformate and the oxidant gas, where anode off gas 21 and cathode off gas 22 are generated; and a hot water storage device 120 for storing recovered heat recovered from cooling water 24 used to cool the fuel cell 20, wherein the reforming device takes in and combusts the anode off gas to generate combusted exhaust gas 6, and wherein there is further provided a control device 122 for performing control to use heated gas composed of either the combusted exhaust gas or the cathode off gas as a heat source for the humidifying device when the temperature of the hot water storage device is lower than a predetermined value and to use the cooling water as the heat source when the temperature of the hot water storage device is higher than the predetermined value.

## Description

### [Technical Field]

The present invention relates to a fuel cell cogeneration system, and more particularly relates to a fuel cell cogeneration system equipped with an oxidant gas humidifying device for humidifying oxidant gas.

### [Background Art]

In a fuel cell cogeneration system which generates electricity through an electrochemical reaction between hydrogen-rich reformate (reformed gas) generated from a raw material fuel such as a city gas, LPG (liquefied petroleum gas), digestion gas, methanol, GTL (gas to liquid) or kerosene in a reforming device and supplied to a fuel electrode of a fuel cell and oxygen-containing oxidant gas such as air supplied to an air electrode of the fuel cell and supplies the generated electricity and which recovers the waste heat produced by the electricity generation process in the fuel cell and so on and supplies the heat as thermal energy, it is very important to the economic efficiency of the system to achieve a high system operation rate in addition to high electricity generation efficiency and high waste heat recovery efficiency. In conventional fuel cell cogeneration systems, when a hot water storage tank for storing waste heat becomes full, since the fuel cell cannot be cooled to a predetermined operation temperature, the system must be stopped or a radiator provided in the system must be activated.

### [Disclosure of the Invention]

### [Problem to be Solved by the Invention]

In the case of a fuel cell cogeneration system with high waste heat recovery efficiency, since the hot water storage tank becomes full quickly in, for example, summertime, the system must be stopped or the radiator must be activated very frequently. As a result, there arises a problem that the operation rate of the system decreases and power consumption increases.
The present invention has been made in view of the above circumstances and it is, therefore, an object of the present invention to provide a fuel cell cogeneration system which can achieve a high system operation rate in addition to high electricity generation efficiency and high waste heat recovery efficiency.

### [Means for Solving the Problem]

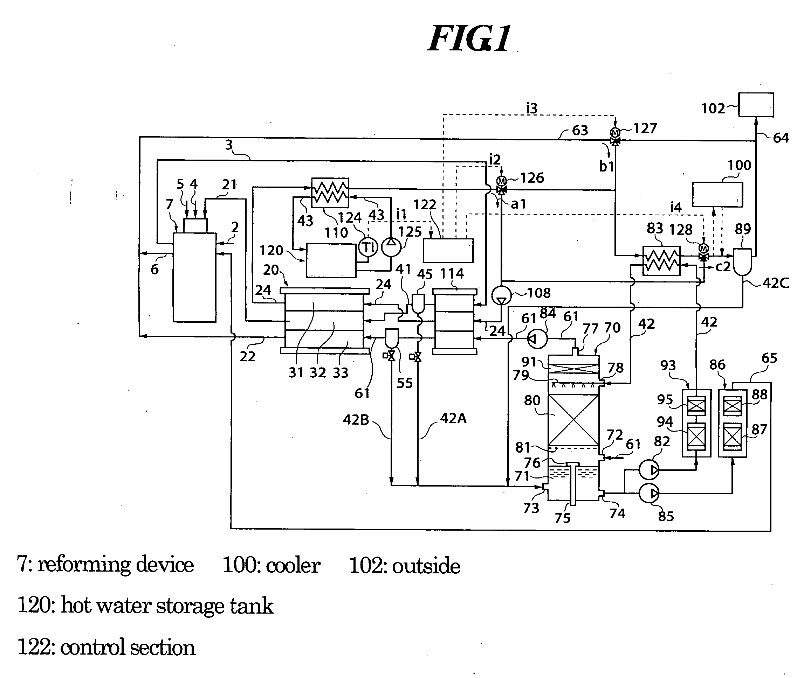

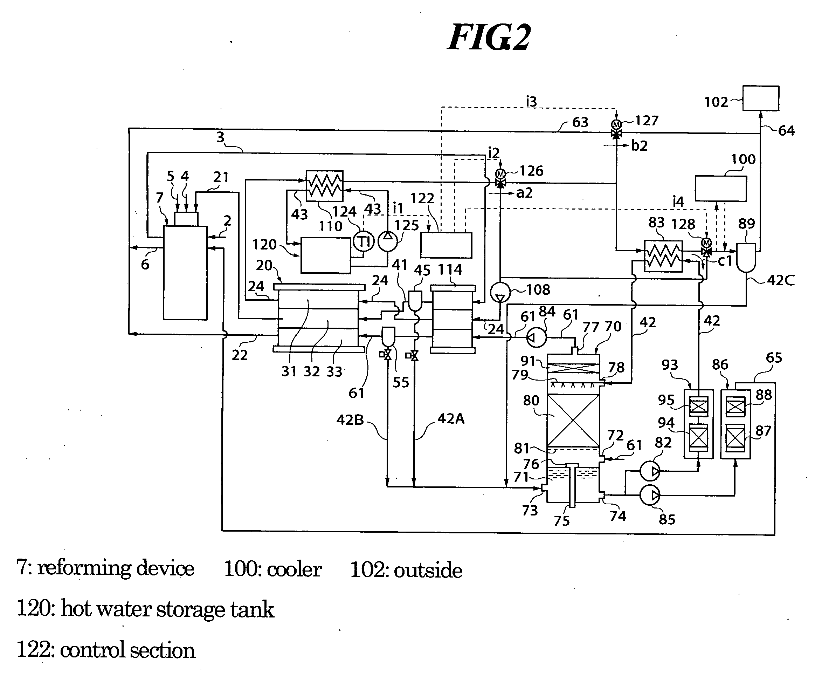

In order to achieve the above object, a fuel cell cogeneration system 1 according to an embodiment of the present invention comprises, as shown in FIGs. 1 and 2 for example, a reforming device 7 for reforming raw material fuel 2 to generate reformate 3; an oxidant gas humidifying device 70 for taking in recovered water 42A recovered from the reformate 3 and oxidant gas 61, humidifying the oxidant gas 61 with the recovered water42A, and discharging the oxidant gas 61; a fuel cell 20 for generating electricity through an electrochemical reaction between the generated reformate 3 and the discharged oxidant gas 61, where anode off gas 21 and cathode off gas 22 are generated from the generated reformate 3 and the discharged oxidant gas 61, respectively; and a hot water storage device 120 for storing recovered heat recovered from cooling water 24 used to cool the fuel cell 20 and discharged from the fuel cell 20; wherein the reforming device 7 takes in and combusts the anode off gas 21 to generate combusted exhaust gas 6, and wherein there is further provided a control device 122 for performing control to use heated gas 63 composed of at least either the combusted exhaust gas 6 or the cathode off gas 22 as a heat source for the oxidant gas humidifying device 70 when the temperature of the hot water storage device 120 is lower than a predetermined value and to use the discharged cooling water 24 as a heat source for the oxidant gas humidifying device 70 when the temperature of the hot water storage device 120 is higher than the predetermined value. The case that the temperature of the hot water storage device 120 is lower than a predetermined value is that the hot water storage device 120 is not full, and the case that the temperature of the hot water storage device 120 is higher than the predetermined value is that the hot water storage device 120 is full.

With the above configuration, since the control device 122 is provided, the fuel cell cogeneration system 1 can be controlled to use the heated gas 63 as a heat source for the oxidant gas humidifying device 70 to recover waste heat in the heated gas 63 when the temperature of the hot water storage device 120 is lower than the predetermined value and to use the cooling water 24 discharged from the fuel cell 20 as a heat source for the oxidant gas humidifying device 70 to recover waste heat in the cooling water 24 when the temperature of the hot water storage device 120 is higher than the predetermined value. Therefore, the fuel cell cogeneration system 1 can achieve high electricity generation efficiency and high waste heat recovery efficiency and also achieve a high system operation rate.

Moreover, when the temperature of the hot water storage device 120 is lower than the predetermined value, waste heat in the cooling water 24 from the fuel cell 20 can be recovered and stored in the hot water storage device 120 as recovered heat to cool the cooling water 24. When the temperature of the hot water storage device 120 is higher than the predetermined value, waste heat in the cooling water 24 from the fuel cell 20 can be recovered with the oxidant gas humidifying device 70 by using the cooling water 24 as a heat source for the oxidant gas humidifying device 70. Thus, the fuel cell 20 can be continuously cooled with the cooling water 24 and waste heat from the fuel cell 20 can be continuously recovered. It is, therefore, possible to achieve high electricity generation efficiency and high waste heat recovery efficiency and to achieve a high system operation rate. Here, as the temperature of the hot water storage device 120, the temperature of a lower part of the hot water storage device 120 where the temperature is lowest is preferably adopted.

The fuel cell cogeneration system 1 according to another embodiment of the present invention comprises, as shown in FIGs. 1 and 2 for example in the aforementioned fuel cell cogeneration system, a heat exchanging device 83 into which the recovered water 42 is introduced; wherein the heated gas 63 to be used as a heat source for the oxidant gas humidifying device 70 is introduced into the heat exchanging device 83 to heat the introduced recovered water 42 when the temperature is lower than the predetermined value, and wherein the discharged cooling water 24 is introduced into the heat exchanging device 83 to heat the introduced recovered water 42 when the temperature is higher than the predetermined value.

With the above configuration, since there is provided the heat exchanging device 83, waste heat in the heated gas 63 can be recovered by the recovered water 42 in the heat exchanging device 83 when the temperature of the hot water storage device 120 is lower than the predetermined value and waste heat in the cooling water 24 can be recovered by the recovered water 42 in the heat exchanging device 83 when the temperature of the hot water storage device 120 is lower than the predetermined value. Therefore, the heat exchanging device 83 can recover waste heat from the system and the operation of the system can be continued irrespective of the temperature of the hot water storage device 120.

The fuel cell cogeneration system 1 according to another embodiment of the present invention comprises, as shown in FIGs. 1 and 2 for example in the aforementioned fuel cell cogeneration system, a heated gas flow setting devices 127 and 128 for setting a flow of the heated gas 63 to be introduced into the heat exchanging device 83 when the temperature is lower than the predetermined value and for setting the flow of the heated gas 63 not to be introduced into the heat exchanging device 83 when the temperature is higher than the predetermined value; wherein the control device 122 controls the setting of the heated gas flow setting devices 127 and 128. The heated gas flow setting devices 127 and 128 typically set the flow of the heated gas 63 to be directly discharged to the outside 102 without being introduced into the heat exchanging device 83 when the temperature is higher than the predetermined value.

The fuel cell cogeneration system according to another embodiment of the present invention comprises, as shown in FIGs. 1 and 2 for example in the aforementioned fuel cell cogeneration system, a cooling water flow setting devices 126 and 128 for setting a flow of the discharged cooling water 24 not to be introduced into the heat exchanging device 83 when the temperature is lower than the predetermined value and for setting the flow of the discharged cooling water 24 to be introduced into the heat exchanging device 83 when the temperature is higher than the predetermined value; wherein the control device 122 controls the setting of the cooling water flow setting devices 126 and 128.

### [Effects of the Invention]

According to the present invention, since the control device is provided, the fuel cell cogeneration system can be controlled to use either the combusted exhaust gas or the cathode off gas as a heat source for the oxidant gas humidifying device when the temperature of the hot water storage device is lower than the predetermined value and to use the cooling water discharged from the fuel cell as a heat source for the oxidant gas humidifying device when the temperature of the hot water storage device is higher than the predetermined value. Therefore, there can be obtained a fuel cell cogeneration system which can achieve high electricity generation efficiency and high waste heat recovery efficiency and can also achieve a high system operation rate.

The basic Japanese Patent Application No. 2003-171942 filed on June 17, 2003 is hereby incorporated in its entirety by reference into the present application.
The present invention will become more fully understood from the detailed description given hereinbelow. The other applicable fields will become apparent with reference to the detailed description given hereinbelow. However, the detailed description and the specific embodiment are illustrated of desired embodiments of the present invention and are described only for the purpose of explanation. Various changes and modifications will be apparent to those ordinary skilled in the art on the basis of the detailed description.
The applicant has no intention to give to public any disclosed embodiments. Among the disclosed changes and modifications, those which may not literally fall within the scope of the present claims constitute, therefore, a part of the present invention in the sense of doctrine of equivalents.

### [Best Mode for Carrying Out the Invention]

Description is hereinafter made of an embodiment of the present invention with reference to an illustrated example. FIG. 1 and FIG. 2 show an embodiment implementing the present invention. The same or equivalent components are designated by the same or similar numerals in the drawings, and redundant description is omitted.

FIG. 1 and FIG. 2 are schematic block diagrams of a fuel cell cogeneration system 1 as an embodiment of the present invention. The fuel cell cogeneration system 1 includes a reforming device 7; a fuel cell 20 having a cooling water passage 31, a furl electrode 32 and an air electrode 33; a vapor-liquid contact tower 70 as an oxidant gas humidifying device; a hot water storage tank 120 with a thermometer 124 as a hot water storage device for storing hot water 43; a control section 122 as a control device; heat exchanger 83 as heat exchanging device, and heat exchangers 110 and 114; a three-way electromagnetic valve 126 which functions as a cooling water flow setting device; a three-way electromagnetic valve 127 which functions as a heated gas flow setting device; a three-way electromagnetic valve 128 which functions as a cooling water flow setting device and a heated gas flow setting device; vapor-liquid separators 45, 55 and 89; a blower 84; pumps 82, 85, 108 and 125; a water purification device 86; and a water treatment device 93.

FIG. 1 and FIG. 2 are the same except that the open/close states of the three-way electromagnetic valves 126, 127 and 128 are different as described hereinbelow.
The open/close states of the three-way electromagnetic valves 126, 127 and 128 shown in FIG. 1 are those at the time when the temperature of a lower part of the hot water storage tank 120 (the temperature of the hot water 43) is lower than a predetermined value (a value between 35 to 45°C), and the open/close states of the three-way electromagnetic valves 126, 127 and 128 shown in FIG. 2 are those at the time when the' temperature of the lower part of the hot water storage tank 120 is higher than the predetermined value. The control section 122 controls the switching of the open/close states of the three-way electromagnetic valves 126, 127 and 128 based on the temperature measured by the thermometer 124 for measuring the lower part of the hot water storage tank 120. A temperature signal i1 from the thermometer 124 is transmitted to the control section 122. Switching signals i2, i3 and i4 for the three-way electromagnetic valves 126, 127 and 128 respectively are transmitted from the control section 122.

The reforming device 7 takes in raw material fuel 2 such as natural gas, naphtha, methanol or kerosene and reforming device supply water 65 (reforming water) fed from the water purification device 86 to generate hydrogen-containing reformate 3 mainly composed of hydrogen through a reforming reaction. To be mainly composed of hydrogen means to contain a sufficient amount of hydrogen to generate electricity through an electrochemical reaction with an oxidant in the fuel cell. In general, it means to contain at least 40% by volume, more specifically around 75% by volume, of hydrogen. The reformate 3 generated in the reforming device 7 is fed to the fuel electrode 32 of the fuel cell 20 via the heat exchanger 114. The reformate 3 has a temperature of 65 to 100°C when it enters the heat exchanger 114 and a temperature of 50 to 65°C when it leaves the heat exchanger 114. The reforming device 7 also takes in air 4 (combustion air) and anode off gas 21, which is described later, discharged from the fuel electrode 32 into a combustion section (not shown) thereof and combusts the mixture to generate combusted exhaust gas 6. The destination of the combusted exhaust gas 6 is described later. When the reforming device 7 is activated or when reforming heat is insufficient to cause a reforming reaction, combustion fuel 5 can be supplied to the combustion section as auxiliary fuel for the reforming device 7 and combusted therein. The heat generated by the combustion in the combustion section is used as reforming heat for a reforming reaction of the raw material fuel 2.

As the fuel cell 20, a stacked solid polymer electrolyte fuel cell can be used. The air electrode 33 takes in oxidant gas 61 fed from the vapor-liquid contact tower 70 via the heat exchanger 114. The cooling water passage 31 takes in stack cooling water 24 as cooling water pressure-fed from the pump 108 and supplied via the heat exchanger 114. The fuel electrode 32 takes in reformate 3 generated in the reforming device 7-and supplied via the heat exchanger 114. The fuel cell 20 generates electricity through an electrochemical reaction between the oxidant gas 61 and the reformate 3. Cathode off gas 22 is discharged from the air electrode 33 of the fuel cell 20. The stack cooling water 24 used to cool the fuel cell 20 is discharged from the cooling water passage 31. Anode off gas 21 is discharged from the fuel electrode 32.

The cathode off gas 22 discharged from the air electrode 33 of the fuel cell 20 and the combusted exhaust gas 6 discharged from the reforming device 7 are mixed to form mixed gas 63 as heated gas. The three-way electromagnetic valve 127, the heat exchanger 83, the three-way electromagnetic valve 128 and the vapor-liquid separator 89 are disposed in this order in the route through which the mixed gas 63 flows.

The three-way electromagnetic valve 127 is switchable between an open/close state (b1) which allows the mixed gas 63 to flow from the reforming device 7/the air electrode 33 to the heat exchanger 83 (see FIG. 1) and an open/close state (b2) which allows the mixed gas 63 discharged from the reforming device 7/the air electrode 33 to be discharged to the outside 102 as exhaust gas 64 (see FIG. 2).

The three-way electromagnetic valve 128 is switchable between an open/close state (c2) which allows the mixed gas 63 to flow from the heat exchanger 83 to the vapor-liquid separator 89 (see FIG. 1) and an open/close state (c1) which allows the stack cooling water 24 to flow from the heat exchanger 83 to the pump 108 (see FIG. 2). The reason why the stack cooling water 24 flows through the heat exchanger 83 in the case shown in FIG. 2 is described later.

When the temperature of the lower part of the hot water storage tank 120 is lower than the predetermined value (in the case shown in FIG. 1), since the three-way electromagnetic valve 127 is in the open/close position b1 and the three-way electromagnetic valve 126 is in an open/close position a1 as described later, the heat exchanger 83 takes in the mixed gas 63 to transfer some of the latent heat and sensible heat thereof to the recovered water 42 supplied from the vapor-liquid contact tower 70. The mixed gas 63 has a temperature of 60 to 80°C when it enters the heat exchanger 83 and a temperature of 35 to 55°C when it leaves the heat exchanger 83. In this case, the recovered water 42 has a temperature of 30 to 50°C when it enters the heat exchanger 83 and a temperature of 55 to 70°C when it leaves the heat exchanger 83.

When the temperature of the lower part of the hot water storage tank 120 is higher than the predetermined value (in the case shown FIG. 2), since the three-way electromagnetic valve 127 is in the open/close position b2 and the three-way electromagnetic valve 126 is in an open/close position a2 as described later, the heat exchanger 83 takes in the stack cooling water 24, and blocks the inflow of the mixed gas 63, to transfer some of the sensible heat of the stack cooling water 24 to the recovered water 42 supplied from the vapor-liquid contact tower 70. The stack cooling water 24 has a temperature of 55 to 75°C when it enters the heat exchanger 83 and a temperature of 50 to 70°C when it leaves the heat exchanger 83. In this case, the recovered water 42 has a temperature of 30 to 50°C when it enters the heat exchanger 83 and a temperature of 55 to 70°C when it leaves the heat exchanger 83.

In the case shown in FIG. 1, the vapor-liquid separator 89 takes in the mixed gas 63 and separates the mixed gas 63 and recovered water 42C condensed in the mixed gas 63. The mixed gas 63 discharged from the vapor-liquid separator 89 after the recovered water 42C is separated, is discharged to the outside 102 as exhaust gas 64. The separated recovered water 42C is fed to the vapor-liquid contact tower 70. In the case shown in FIG. 2, since the three-way electromagnetic valve 128 is in the open/close position c1, no fluid is supplied to the vapor-liquid separator 89 side of the three-way electromagnetic valve 128.

The anode off gas 21 discharged from the fuel electrode 32 of the fuel cell 20 is fed into the combustion section (not shown) of the reforming device 7 and combusted therein.

The heat exchanger 110, the three-way electromagnetic valve 126 and the pump 108 are disposed in this order in the route through which the stack cooling water 24 discharged from the cooling water passage 31 of the fuel cell 20 flows. The hot water 43 stored in the hot water storage tank 120 is pressurized and fed to the heat exchanger 110 by the pump 125. In the case shown in FIG. 1, the hot water 43 is heated by the stack cooling water 24 to recover waste heat in the stack cooling water 24 in the heat exchanger 110. The hot water 43 which is heated to recover the waste heat is returned to the hot water storage tank 120, and the waste heat is stored in the hot water storage tank 120 as recovered heat. That is, the hot water 43 is circulated through the pump 125, the hot water storage tank 120 and the heat exchanger 110. In this case, the stack cooling water 24 has a temperature of 60 to 80°C when it enters the heat exchanger 110 and a temperature of 50 to 70°C when it leaves the heat exchanger 110. The hot water 43 has a temperature of 5 to 45°C when it enters the heat exchanger 110 and a temperature of 60 to 80°C when it leaves the heat exchanger 110.

The three-way electromagnetic valve 126 is switchable between an open/ciose state (a1) which allows the stack cooling water 24 discharged from the heat exchanger 110 to flow to the pump 108 (see FIG. 1) and an open/close state (a2) which allows the stack cooling water 24 to flow from the heat exchanger 110 to the heat exchanger 83 (see FIG. 2).

In the case shown in FIG. 1, the stack cooling water 24 is supplied from the cooling water passage 31 of the fuel cell 20 to the heat exchanger 110. In the heat exchanger 110, heat is exchanged between the stack cooling water 24 and the hot water 43, that is, the hot water 43 is heated by the stack cooling water 24 and the stack cooling water 24 is cooled by the hot water 43, and thus waste heat in the stack cooling water 24 is recovered by the hot water 43. Since the three-way electromagnetic valve 126 is in the open/close position al, the stack cooling water 24, from which the waste heat has been recovered, is fed to the pump 108 via the three-way electromagnetic valve 126 and from the pump 108 to the heat exchanger 114, and supplied from the heat exchanger 114 to the cooling water passage 31 of the fuel cell 20. The stack cooling water 24 has a temperature of 50 to 70°C when it enters the heat exchanger 114 and a temperature of 55 to 75°C when it leaves the heat exchanger 114.

In the case shown in FIG. 2, the stack cooling water 24 is fed from the cooling water passage 31 of the fuel cell 20 to the heat exchanger 110 and from the heat exchanger 110 to the three-way electromagnetic valve 126, and then fed from the three-way electromagnetic valve 126 to the passage connecting between the heat exchanger 83 and the three-way electromagnetic valve 127 and to the heat exchanger 83, since the three-way electromagnetic valve 126 is in the open/close position a2. The stack cooling water 24 is then fed from the heat exchanger 83 to the three-way electromagnetic valve 128. Since the three-way electromagnetic valve 128 is in the open/close position c1, the stack cooling water 24 is fed from the three-way electromagnetic valve 128 to the pump 108 and from the pump 108 to the heat exchanger 114, and supplied from the heat exchanger 114 to the cooling water passage 31 of the fuel cell 20.

The heat exchanger 114 exchanges heat between the stack cooling water 24 discharged from the cooling water passage 31 of the fuel cell 20 and the oxidant gas 61 fed from the vapor-liquid contact device 70, and between the stack cooling water 24 and the reformate 3 fed from the reforming device 7. The reformate 3 is cooled by the stack cooling water 24 to adjust its temperature and dew point to appropriate values, and the oxidant gas 61 is also cooled by the stack cooling water 24. The oxidant gas 61 has a temperature of 55 to 85°C when it enters the heat exchanger 114 and a temperature of 50 to 70°C when it leaves the heat exchanger 114.

The reformate 3 cooled by the stack cooling water 24 is fed to the vapor-liquid separator 45 and supplied from the vapor-liquid separator 45 to the fuel electrode 32 of the fuel cell 20. The oxidant gas 61 cooled by the stack cooling water 24 is fed to the vapor-liquid separator 55 and supplied from the vapor-liquid separator 55 to the air electrode 33 of the fuel cell 20.

The vapor-liquid separator 45 recovers recovered water 42A from the reformate 3 which is fed from the reforming device 7 and cooled in the heat exchanger 114. The recovered water 42A is supplied from the vapor-liquid separator 45 to the vapor-liquid contact device 70.

The vapor-liquid separator 55 recovers recovered water 42B from the oxidant gas 61 which is fed from the vapor-liquid contact tower 70 by the blower 84 and cooled in the heat exchanger 114. The recovered water 42B is fed from the vapor-liquid separator 55 to the vapor-liquid contact tower 70.

The vapor-liquid contact tower 70 has in its lower part: a liquid storage section 71 for storing supplied recovered water 42; a recovered water inlet 73 through which the recovered waters 42A, 42B and 42C fed from the vapor-liquid separators 45, 55 and 89, respectively, are introduced into it; a recovered water suction port 74 through which the recovered water 42 is sucked out by pumps 82 and 85; an overflow pipe 75 into which the recovered water 42 overflows when the recovered water 42 exceeds a predetermined level; an overflow port 7 6 through which the recovered water 42 flows into the overflow pipe 75; and an oxidant gas inlet 72 through which the oxidant gas 61 is introduced into the vapor-liquid contact tower 70 where the oxidant gas 61 is located above the overflow port 76. The recovered water 42 flows out of the vapor-liquid contact tower 70 through the overflow pipe 75. The vapor-liquid contact tower 70 has in its upper part: an oxidant gas outlet 77 through which the oxidant gas 61 flows out to the air electrode 33 of the fuel cell 20; a recovered water pouring port 78 through which the recovered water 42 returned from the heat exchanger 83 is poured into it; and a water sprayer 79 for spraying the recovered water 42 poured through the recovered water pouring port 78 into the water storage section 71 as fine droplets. The predetermined water level is the level at which the overflow port 76 is set.

The vapor-liquid contact tower 70 has in its intermediate part: a filling section 80 filled with a filling for promoting the contact between the poured recovered water 42 and the oxidant gas 61; and a filling support plate 81 for supporting the filling section 80. The vapor-liquid contact tower 70 also has a demister 91 between the water sprayer 79 and the oxidant gas outlet 77 located in its upper part in order to remove mist which is carried over by the oxidant gas 61 rising from the filling section 80 in its intermediate part.

The recovered water 42 is fed from the recovered water suction port 74 of the liquid storage section 71 to the heat exchanger 83 via the water treatment device 93 by the pump 82 and heated through heat exchange with the mixed gas 63 (in the case shown in FIG. 1) or with the stack cooling water 24 (in the case shown in FIG. 2). Then, the recovered water 42 is supplied to the water sprayer 79 in the upper part of the vapor-liquid contact tower 70 and sprayed toward the filling section 80 by the water sprayer 79. The recovered water 42 is circulated through passages connecting the recovered water suction port 74, the pump 82, the water treatment device 93, the heat exchanger 83, the recovered water pouring port 78, the water sprayer 79 and the filling section 80 as described above.

Since the blower 84 for pressure-feeding the oxidant gas 61 to the heat exchanger 114 is connected to the oxidant gas outlet 77 of the vapor-liquid contact tower 70 and sucks the oxidant gas 61 in the vapor-liquid contact tower 70, the interior of the vapor-liquid contact tower 70 is not pressurized. The oxidant gas 61 sucked in through the oxidant gas inlet 72 and the recovered water 42 poured through the recovered water pouring port 78 are brought into countercurrent contact with each other in the filling section 80, whereby the oxidant gas 61 is washed, heated and humidified by the recovered water 42. The oxidant gas 61 has a temperature of 5 to 40°C when it enters the vapor-liquid contact tower 70 and a temperature of 50 to 65°C when it leaves the vapor-liquid contact tower 70.

The recovered water 42 in the vapor-liquid contact tower 70 is decarbonated and cooled by the oxidant gas 61. Although a small amount of carbon dioxide gas is mixed into the oxidant gas 61 through the decarbonation of the recovered water 42, it does not cause deterioration of the fuel cell 20 nor affect the service life of the fuel cell 20 since carbon dioxide gas has no poisoning effect on the air electrode catalyst (not shown) in the fuel cell 20. In this embodiment, the oxidant gas inlet 72 is opened to the atmosphere, the atmospheric air can be used as the oxidant gas 61.

The recovered water 42 decarbonated in the vapor-liquid contact tower 70 is fed, as reforming device supply water 65, to the water purification device 86 having an ion exchange resin-filled column 87 by the pump 85 connected to the recovered water suction port 74. The reforming device supply water 65 is purified into pure water by the ion exchange resin-filled column 87 in the water purification device 86 and fed to the reforming device 7. A solid matter filter 88 may be provided downstream of the ion exchange resin-filled column 87 in the water purification device 86.

Although the reforming device supply water 65 is fed to the water purification device 86 by the pump 85 for circulation in this embodiment, a branch pipe connecting the inlet of the water purification device 86 and the discharge port of the pump 82 connected to the recovered water suction port 74 may be provided to feed some of the circulating recovered water 42 to the water purification device 86 as the reforming device supply water 65. In this case, the pump 85 for the supply water can be omitted to reduce the number of components.

In this embodiment, the water purification device 86 can be constituted by connecting a mixed-bed type ion exchange resin-filled column 87 filled with a mixture of a cation exchange resin and an anion exchange resin and a solid matter filter 88 in series.

When the oxidant gas 61 contains a large amount of solid contaminants such as powder dust, another solid matter filter 88 (not shown) may be added upstream of the ion exchange resin-filled column 87. In this case, since the reforming device supply water 65 has been decarbonated, the service life of the ion exchange resin can be extended and the maintenance intervals of the water purification device 86 can be extended.

The oxidant gas 61 fed out of the oxidant gas outlet 77 of the vapor-liquid contact tower 70 is pressurized by the blower 84 for the oxidant gas 61 and supplied to the air electrode 33 of the fuel cell 20 as treated oxidant gas 61.

With the above configuration, as a result of pressurization of the oxidant gas 61 by the blower 84, the dew point of the oxidant gas 61 rises. For example, when the pressure of the oxidant gas 61 is increased by 12kPa by the blower 84 and the dew point of the oxidant gas 61 at the oxidant gas outlet 77 is 50°C, the dew point of the treated oxidant gas 61 rises by approximately 2°C to approximately 52°C.

When the dew point of the oxidant gas 61 to be achieved is constant, as described above, the humidification load in the vapor-liquid contact tower 70 can be reduced and the interior of the vapor-liquid contact tower 70 is not substantially pressurized by the blower 84 since the blower 84 for the oxidant gas 61 is disposed downstream of the vapor-liquid contact tower 70.

Since the liquid storage section 71 in the vapor-liquid contact tower 70 has atmospheric pressure since it is kept to be opened to the atmosphere, the recovered waters 42A, 42B and 42C can be introduced into the liquid storage section 71 from the vapor-liquid separators 45, 55 and 89, respectively, by the differences between the levels in the vapor-liquid separators 45, 55 and 89 and the liquid storage section 71. Thus, there is no need for a liquid feeding pump or the like for transferring the recovered water 42.

In addition, there is an advantage that excess recovered water 42 can be discharged to the outside of the fuel cell cogeneration system 1 through a discharge port at the bottom of the overflow pipe 75 located in the liquid storage section 71 without the use of discharge devices such as an additional liquid transferring pump and a liquid level sensor.

Here, when a cooler 100 connected downstream of the heat exchanger 83 and upstream of the vapor-liquid separator 89 by dashed line arrows is added, heat and moisture can be further recovered from the mixed gas 63 to be discharged to the outside 102 as exhaust gas 64 (in the case shown in FIG. 1).

The water treatment device 93 is located downstream of the pump 82 for circulation in the circulation route of the recovered water 42 connected to the recovered water suction port 74 of the vapor-liquid contact tower 70 and has an ion exchange resin-filled column 94. The ion exchange resin for use in the ion exchange resin-filled column 94 of the water treatment device 93 is preferably an anion exchange resin. In this embodiment, an acid gas contaminant contained in the oxidant gas 61, for example, sulfur oxide SO₂ is reacted with hydroxide ions OH⁻ in the recovered water 42 upon being contacted with the recovered water 42 in the filling section 80, ionized as represented by the reaction formula: SO₂ + OH⁻→ HSO₃⁻ and absorbed into the recovered water 42.

The HSO₃⁻ ions absorbed into the water circulating in the system are ion-exchanged with the hydroxide ions OH⁻ in the anion exchange resin in the ion exchange resin-filled column 94 as represented by the reaction formula: HSO₃⁻ + R-OH⁻ → R-HSO₃⁻ + OH⁻ and absorbed by the ion exchange resin in the ion exchange resin-filled column 94. At this time, hydroxide ions OH⁻ are supplied to the recovered water 42.

In this embodiment, since the water treatment device 93 using an anion exchange resin is provided in the route through which the recovered water 42 circulates, hydroxide ions OH⁻ are constantly supplied to the recovered water 42 circulating through the vapor-liquid contact tower 70. That is, the circulating recovered water 42 is always kept alkaline so that the acid gas contaminants contained in the oxidant gas 61 such as NOx and SOx can be effectively removed.

The functions of the embodiment are hereinafter described.
The reformate 3 generated in the reforming device 7 is fed to the heat exchanger 114 and cooled by the stack cooling water 24 in the heat exchanger 114. Then, the recovered water 42A is separated and removed from the reformate 3 in the vapor-liquid separator 45. The reformate 3, from which the recovered water 42A has been removed in the vapor-liquid separator 45, is fed to the fuel electrode 32 of the fuel cell 20.

The oxidant gas 61 sucked into the vapor-liquid contact tower 70 is conducted to the filling section 80, brought into contact with the recovered water 42 when passing through the filling section 80 and washed, heated and humidified by the recovered water 42. After being washed, heated and humidified, the oxidant gas 61 passes through the demister 91 to remove mist therefrom.

The oxidant gas 61 discharged from the vapor-liquid contact tower 70 is pressurized by the blower 84, pressure-fed to the heat exchanger 114 and cooled by the stack cooling water 24 in the heat exchanger 114. The condensed recovered water 42B is condensed and separated from the oxidant gas 61 discharged from the heat exchanger 114 in the vapor-liquid separator 55, and the oxidant gas 61, from which the recovered water 42B has been separated, is supplied to the air electrode 33 of the fuel cell 20. The fuel cell 20 generates electricity through an electrochemical reaction between the oxidant gas 61 supplied to the air electrode 33 and the reformate 3 supplied to the fuel electrode 32, and discharges anode off gas 21 and cathode off gas 22 from the fuel electrode 32 and the air electrode 33, respectively.

The anode off gas 21 discharged from the fuel electrode 32 is fed to the reforming device 7 and combusted therein to generate reforming heat for the reforming reaction. The reforming device 7 discharges combusted exhaust gas 6 generated by the combustion of the anode off gas 21. The combusted exhaust gas 6 and the cathode off gas 22 are mixed into mixed gas 63.

In the case shown in FIG. 1, since the three-way electromagnetic valve 127 is in the open/close state b1 and the three-way electromagnetic valve 128 is in the open/close state c2, the mixed gas 63 is supplied to the heat exchanger 83 through the three-way electromagnetic valve 127. In the heat exchanger 83, the mixed gas 63 exchanges heat with the recovered water 42, that is, the recovered water 42 is heated by the mixed gas 63 and waste heat in the mixed gas 63 is recovered by the recovered water 42. After that, the mixed gas 63 is fed to the vapor-liquid separator 89 through the three-way electromagnetic valve 128. The recovered water 42C condensed in the mixed gas 63 is recovered by the vapor-liquid separator 89 and fed to the vapor-liquid contact device 70. The mixed gas 63, from which the recovered water 42C has been recovered in the vapor-liquid contact device 70, is discharged to the outside 102 as the exhaust gas 64.

In the case shown in FIG. 2, since the three-way electromagnetic valve 127 is in the open/close state b2 and the three-way electromagnetic valve 128 is in the open/close state c1, the mixed gas 63 bypasses the heat exchanger 83, the three-way electromagnetic valve 128 and the vapor-liquid separator 89 through the three-way electromagnetic valve 127, and is discharged to the outside 102 as the exhaust gas 64. In this case, the waste heat in the mixed gas 63 is not recovered but discharged to the outside 102.

The circulation route of the stack cooling water 24 discharged from the cooling water passage 31 to the pump 108 changes depending on whether the temperature of the lower part of the hot water storage tank 120 is lower (see FIG. 1) or higher (see FIG. 2) than a predetermined value (a value between 35 to 45°C) as described below. In the case that the temperature of the lower part of the hot water storage tank 120 is lower than the predetermined value (see FIG. 1), there is a difference between the temperatures of the stack cooling water 24 and the hot water 43, and the stack cooling water 24 discharged from the cooling water passage 31 of the fuel cell 20 is fed to the heat exchanger 110. In the heat exchanger 110, the stack cooling water 24 and the hot water 43 fed from the hot water storage tank 120 exchange heat, that is, the stack cooling water 24 heats the hot water 43 and the hot water 43 cools the stack cooling water 24. Waste heat from the fuel cell 20 having recovered by the stack cooling water 24 is recovered by the hot water 43.

Since the waste heat can be recovered by the hot water 43 in the heat exchanger 110 and since the three-way electromagnetic valve 126 is in the open/close position a1, the stack cooling water 24 discharged from the heat exchanger 110 is directed from the three-way electromagnetic valve 126 to the pump 108, pressurized by the pump 108, and fed to the heat exchanger 114. The stack cooling water 24 is used to cool the reformate 3 and the oxidant gas 61 in the heat exchanger 114, and then supplied from the heat exchanger 114 to the cooling water passage 31 of the fuel cell 20 to cool the fuel cell 20.

Next, the case in which the temperature of the lower part of the hot water storage tank 120 is higher than the predetermined value (see FIG. 2) is described. This is the case where the difference between the temperatures of the stack cooling water 24 and the hot water 43 is insufficient. In this case, the stack cooling water 24 and the hot water 43 exchange heat in an amount smaller than the predetermined amount to be exchanged in the heat exchanger 110. Thus, waste heat in the stack cooling water 24 is not fully recovered by the heat exchanger 110 and the stack cooling water 24 is not sufficiently cooled by the hot water 43.

Therefore, in this case, the three-way electromagnetic valve 126 is switched to the open/close position a2 and the three-way electromagnetic valve 128 is switched to the open/close position c1 (see FIG. 2) to direct the stack cooling water 24 discharged from the heat exchanger 110 from the three-way electromagnetic valve 126 to the heat exchanger 83 so that the stack cooling water 24 and the recovered water 42 fed from the vapor-liquid contact tower 70 via the water treatment device 93 can exchange heat in the heat exchanger 83. The stack cooling water 24 heats the recovered water 42 and the recovered water 42 cools the stack cooling water 24 through the heat exchange process, and the waste heat having recovered from the fuel cell 20 by the stack cooling water 24 is recovered by the recovered water 42. The stack cooling water 24 discharged from the heat exchanger 83 is directed from the three-way electromagnetic valve 128 to the pump 108. After that, the stack cooling water 24 is directed from the heat exchanger 114 to the fuel cell 20 in the same manner as described before, and hence the description is not repeated.

The recovered water 42A condensed in the reformate 3 cooled in the heat exchanger 114 is separated with the vapor-liquid separator 45 and fed to the vapor-liquid contact tower 70. The recovered water 42C condensed in the mixed gas 63 cooled in the heat exchanger 83 is separated with the vapor-liquid separator 89 and fed to the vapor-liquid contact tower 70. The recovered water 42B condensed in the oxidant gas 61 cooled in the heat exchanger 114 is separated with the vapor-liquid separator 55 and fed to the vapor-liquid contact tower 70.

The recovered water 42 introduced into the vapor-liquid contact tower 70 is used as the reforming device supply water 65. The reforming device supply water 65 is sucked by the pump 85, purified into pure water in the water purification device 86, and supplied from the water purification device 86 to the reforming device 7.

The recovered water 42 in the vapor-liquid contact tower 70 is also sucked by the pump 82 and fed to the water treatment device 93, and acid gas contaminants in the recovered water 42 is removed with the ion exchange resin-filled column 94. The recovered water 42 discharged from the water treatment device 93 is heated by the mixed gas 63 (see FIG. 1) or the stack cooking water 24 (see FIG. 2) in the heat exchanger 83 and recovers waste heat having recovered from the fuel cell 20 by the mixed gas 63 or the stack cooking water 24. The recovered water 42 having recovered the waste heat is poured into the vapor-liquid contact tower 70 and brought into contact with the oxidant gas 61 to humidify, heat and wash the oxidant gas 61.

According to the fuel cell cogeneration system 1 of the embodiment of the present invention, since the control device 122 switches the open/close positions of the three-way electromagnetic valves 126, 127 and 128, when the lower part of the hot water storage device 120 is lower than a predetermined value, waste heat in the stack cooling water 24 from the fuel cell 20 can be recovered by the hot water 43 and stored in the hot water storage tank 120 as recovered heat and the stack cooling water 24 can be cooled. When the lower part of the hot water storage tank 120 is higher than the predetermined value, the stack cooling water 24 can be used as a heat source for the vapor-liquid contact tower 70 to recover waste heat in the stack cooling water 24 from the fuel cell 20 by the recovered water 42 to be stored in the vapor-liquid contact tower 70 and the cooling water 24 can be cooled. Thus, the fuel cell 20 can be continuously cooled with the stack cooling water 24 and waste heat from the fuel cell 20 can be continuously recovered. It is, therefore, possible to achieve high electricity generation efficiency and high waste heat recovery efficiency and to achieve a high system operation rate.

### [Brief Description of Drawings]

FIG. 1 is a schematic block diagram of a fuel cell cogeneration system according to an embodiment of the present invention in the case that the temperature of a lower part of a hot water storage tank is lower than a predetermined value.
FIG. 2 is a schematic block diagram of a fuel cell cogeneration system according to the embodiment of the present invention in the case that the temperature of the lower part of the hot water storage tank is higher than the predetermined value.

### [Description of Reference Numerals]

1: fuel cell cogeneration system
2: raw material fuel
3: reformate
4: air
5: combustion fuel
6: combusted exhaust gas
7: reforming device
20: fuel cell
21: anode off gas
22: cathode off gas
24: stack cooling water (cooling water)
42, 42A, 42B, 42C: recovered water
45, 55, 89: vapor-liquid separator
61: oxidant gas
63: mixed gas (heated gas)
64: exhaust gas
65: reforming device supply water
70: vapor-liquid contact tower (oxidant gas humidifying device)
82, 85; 108, 125: pump
83: heat exchanger (heat exchanging device)
84: blower
86: water purification device
93: water treatment device
110, 114: heat exchanger
120: hot water storage tank (hot water storage device)
122: control section (control device)
126: three-way electromagnetic valve (cooling water flow setting device)
127: three-way electromagnetic valve (heated gas flow setting device)
128: three-way electromagnetic valve (heated gas flow setting device)(cooling water flow setting device)

## Claims

1. A fuel cell cogeneration system, comprising:
a reforming device for reforming raw material fuel to generate reformate;
an oxidant gas humidifying device for taking in recovered water recovered from the reformate and oxidant gas, humidifying the oxidant gas with the recovered water, and discharging the oxidant gas;
a fuel cell for generating electricity through an electrochemical reaction between the generated reformate and the discharged oxidant gas, where anode off gas and cathode off gas are generated from the generated reformate and the discharged oxidant gas, respectively; and
a hot water storage device for storing recovered heat recovered from cooling water used to cool the fuel cell and discharged from the fuel cell;
wherein the reforming device takes in and combusts the anode off gas to generate combusted exhaust gas, and
wherein there is further provided a control device for performing control to use heated gas composed of at least either the combusted exhaust gas or the cathode off gas as a heat source for the oxidant gas humidifying device when a temperature of the hot water storage device is lower than a predetermined value and to use the discharged cooling water as a heat source for the oxidant gas humidifying device when the temperature of the hot water storage device is higher than the predetermined value.

2. The fuel cell cogeneration system of Claim 1,
further comprising a heat exchanging device into which the recovered water is introduced;
wherein the heated gas to be used as a heat source for the oxidant gas humidifying device is introduced into the heat exchanging device to heat the introduced recovered water when the temperature is lower than the predetermined value, and
wherein the discharged cooling water is introduced into the heat exchanging device to heat the introduced recovered water when the temperature is higher than the predetermined value.

3. The fuel cell cogeneration system of Claim 2,
further comprising a heated gas flow setting device for setting a flow of the heated gas to be introduced into the heat exchanging device when the temperature is lower than the predetermined value and for setting the flow of the heated gas not to be introduced into the heat exchanging device when the temperature is higher than the predetermined value;
wherein the control device controls the setting of the heated gas flow setting device.

4. The fuel cell cogeneration system of Claim 2 or 3,
further comprising a cooling water flow setting device for setting a flow of the discharged cooling water not to be introduced into the heat exchanging device when the temperature is lower than the predetermined value and for setting the flow of the discharged cooling water to be introduced into the heat exchanging device when the temperature is higher than the predetermined value;
wherein the control device controls the setting of the cooling water flow setting device.
